(19) Europäisches Patentamt / European Patent Office / Office européen des brevets

(11) **EP 1 468 342 B1**

(12) **EUROPEAN PATENT SPECIFICATION**

(45) Date of publication and mention
of the grant of the patent:
**07.03.2007 Bulletin 2007/10**

(21) Application number: **03731868.0**

(22) Date of filing: **22.01.2003**

(51) Int Cl.:
*G05D 1/02* (2006.01)   *G01S 13/93* (2006.01)
*G01S 17/93* (2006.01)   *A47L 11/00* (2006.01)

(86) International application number:
**PCT/SE2003/000098**

(87) International publication number:
**WO 2003/062937 (31.07.2003 Gazette 2003/31)**

(54) **POSITION DETERMINATION METHOD**

POSITIONSBESTIMMUNGSVERFAHREN

PROCEDE DE DETERMINATION DE LA POSITION D'UN APPAREIL AUTOMATIQUE SUR ROUES

(84) Designated Contracting States:
**AT BE BG CH CY CZ DE DK EE ES FI FR GB GR
HU IE IT LI LU MC NL PT SE SI SK TR**

(30) Priority: **23.01.2002  SE  0200197**

(43) Date of publication of application:
**20.10.2004  Bulletin 2004/43**

(73) Proprietor: **AKTIEBOLAGET ELECTROLUX
105 45 Stockholm (SE)**

(72) Inventors:
• **CHRISTENSEN, Henrik
  S-192 53 Sollentuna (SE)**
• **ZUNINO, Guido
  I-170 25 Loano (IT)**

(56) References cited:
WO-A1-00/38026          US-A1- 5 896 488
US-A1- 6 138 063        US-A1- 2001 004 719

**EP 1 468 342 B1**

**Description**

**TECHNICAL AREA**

The present invention relates to a method and the use of a method for position determination of an automatic apparatus on wheels, such as a robotic vacuum cleaner. At least one wheel on the apparatus comprises at least one wheel sensor that recognizes the rotation of said wheel. The apparatus also comprises at least one room sensor detecting objects in the space surrounding the apparatus.

**BACKGROUND**

Automatic apparatus on wheels, so called robots, are products that during the recent years have increased in importance and interest. Earlier they have been used in industries, professionally, mainly for manufacture tasks. Some of these robots have had features in order to been able to navigate and move in the environment and detect objects in the surrounding area. During the recent years consumer aspects has reached into the robotic area and the features such as for navigation is of interest for the consumers.

One way of achieving navigation possibilities is to place magnetic strips in the floor, which strips the robot follows. The use of strips enables for the user to predetermine the navigation route for the robot. The area around the route can thereby be marked of for people. A magnetic strip following robot may also have the capacity of detecting if it collides with anything, such as an obstacle or the object that it is intended to work with. In order to sense such collisions sensors, which sense physical contact could be used.

Instead of magnetic strips, the robot can use a navigation system that relies on detecting sensors, such as IR (infrared) or Ultrasonic sensors. These sensors can detect objects in its surroundings by transmitting and receiving reflected signals. By using these types of sensors the direction and distance to the sensors can be estimated. In order to manage that, the sensors have to be mounted on the robot and controlled in a proper way. Such a sensor system is disclosed in the European Patent EP0835459.

These sensor system are, despite there properties is detecting objects, not as useful in order to navigate the robot. In order to achieve that, the robot is often equipped with wheel sensor detecting the rotation on each wheel. These sensors sense the wheel rotation and are calibrated regularly in order to take into consideration the distance between the wheels and the wheel dimensions. Wall following is a method that use this kind of wheel sensing system. In this method, the robot starts its operation by following the walls around the room. When this is completed, the robot estimates the size of the room, at least based on information from the wheel sensors, and starts navigating inside the room at least using information from said wheel sensors.

One problem with this wall following using wheel sensors, is that wheel often slips on the floor. These slips often occur when the wheels are worn out and/or the friction against the wall is bad. Another typical cause is cords lying on the floor. This means that if the robot uses wall following it very soon will get problems navigating. In order to solve this problem, a method SLAM is developed. SLAM calculates the robot position based on the relation in position between the robot and an object. In order to do that a sensor system with Ultrasonic or IR can be used. SLAM builds a map of the room inside which the robot navigates. By using a specific algorithm the position of the robot is estimated.

If SLAM is used together with a sensor system that only detects objects in its presence, the method gets difficulties in its estimations. If there are no detectable objects near the robot, this will cause SLAM to fail or work with higher uncertainty because SLAM has too few objects to work with. A way for solving this problem is to improve the capacity of the sensor system. However, all such improvements cost money, which results in more expensive products for the consumer.

The object of the present invention is therefore to achieve a navigation method for a regular robot, which method should be quite reliable and easy to use without the need of expensive components. The method intends to be used in robots, such as robotic vacuum cleaners, in order to improve its operation capacity.

**SUMMARY OF THE INVENTION**

The present invention therefore relates to a method according to claim 1 and the use of a method for position determination of an automatic apparatus on wheels, such as a robotic vacuum cleaner according to claim 20. At least one wheel on the apparatus comprises at least one wheel sensor that recognizes the rotation of said wheel. The apparatus also comprises at least one room sensor detecting objects in the space surrounding the apparatus. The position determination is accomplished at least by using one wheel sensor and estimate the substantial, horizontal extension direction of substantially vertical planes on the objects, which planes are defined by the apparatus, whereby the substantial, actual position of the apparatus is determined using at least one predetermined assumption on the relationship between the extension direction of different planes.

The method is using wheel sensors for position determination and together with that uses predetermined assumptions on characteristics for surrounding planes defined by the apparatus, the information and equipment needed is cheaper.

## DRAWINGS

Fig. 1 shows a perspective view of a robot at which the method of the present invention is applied.
Fig. 2 shows a side view of the robot according to fig. 1.
Fig. 3 shows a front view of the robot according to fig. 1.
Fig. 4 shows a graph of how the sensor system of the robot according to fig. 1 detects is surroundings.
Fig. 5 shows a simplified flow chart of the method according to the present invention.
Fig. 6 shows a simplified view of how the method according to the present invention estimates its current position.
Fig. 7 shows how the estimation according to fig. 6 is partly made.

## AN ILLUSTRATIVE EMBODIMENT

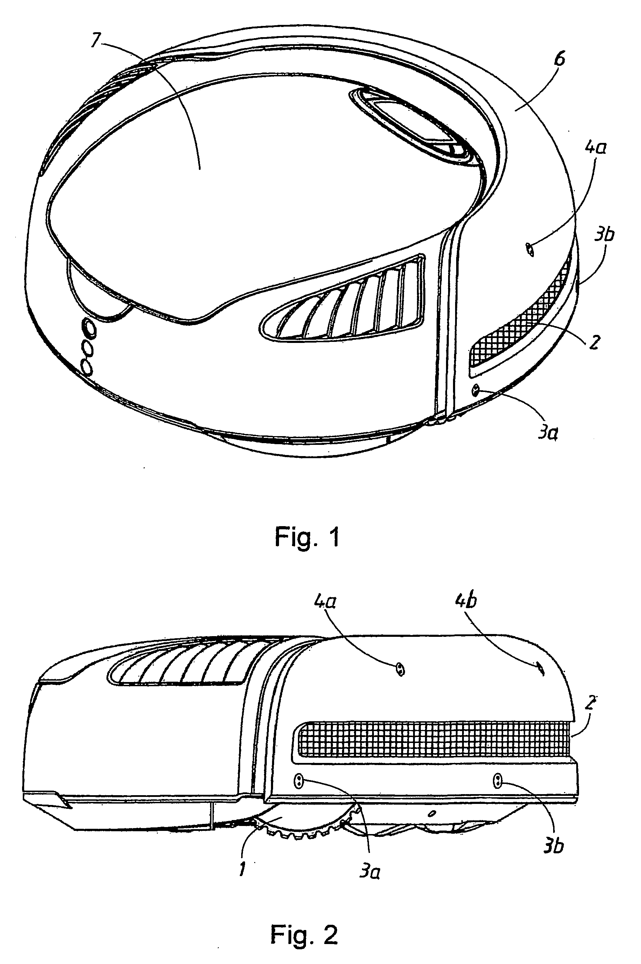

Fig. 1 - 3 shows an illustrative example of a robot together with which the method according to the present invention can be used. The features and navigation system of the robot are initially described. Thereafter, an illustrative embodiment of the method according to the present invention is described.

Fig. 1 - 3 shows an automatic vacuum cleaner robot. The robot shape is circular and it is supported by two driving wheels 1 together with a front supporting wheel (not shown). The driving wheels are made in order to achieve the best possible friction against the floor. The two driving wheels are controlled in order to move the robot in any direction over the floor on which it operates. Each driving wheel therefore is connected to an electric motor, eventually via a gear, which motor is controlled by a control unit, whereby the unit brings the robot into movement. The robot also comprises a brush roller (not shown) as a part of the floor-cleaning feature. This cleaning feature will not be described any further, since its function is not important for the scope of the present invention.

The robot has wheel sensors (not shown) that detect the wheel rotation on each of the two driving wheels 1. The dimension of each driving wheel is stored in connection to the control unit. Moreover, a calibration method further described in the published Swedish patent application 0100925-7 is used. The method calculates the navigation route of the robot taking into consideration the variations in distance between the two driving wheels. This variation is assumed to depend on if and how much the robot turns. By dividing the robot movement into different modes related to different values of wheel distances, each mode could be properly used in order to estimate the movement of the robot in relation to the floor.

In order for the robot to detect objects in its surroundings it is equipped with a sensor system. Thereby, the robot can detect the objects, perform estimating calculations of their position in relation to the robot, and thereafter control the movement of the robot as wished. One controlled movement could be to bring the robot into a slower motion as it approaches the object. Another option is to enable a more effective navigation route. Such an option is disclosed in the published Swedish Patent application 0100924-0. When navigating the robot divides the floor surface into cells, each cell being connected with a value that is re-evaluated as the robot moves. The navigation route is decided depending on which value the cells near the robot have.

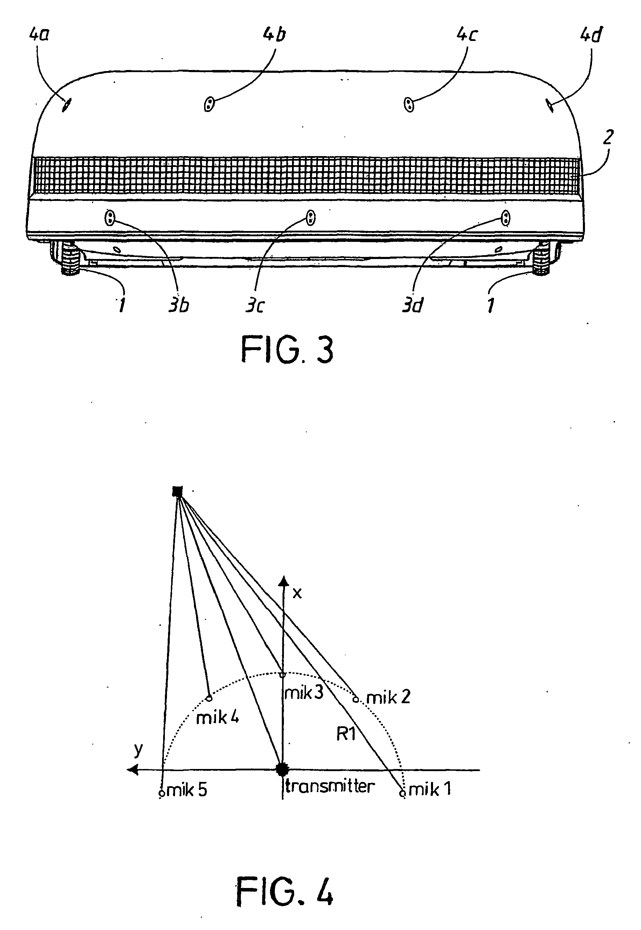

The visible outer parts of the sensor system of the robot are shown in fig. 1 - 3. The system uses ultrasonic signals in order to detect obstacles and objects in its surroundings. One transmitter 2 stretches along the front side of the robot. The transmitter transmits ultrasonic signals that spread out both horizontally and vertically. Microphones 3a - 3e and 4a - 4d are placed along the front side and receives the transmitted signals reflected by an object or obstacle. In fig. 4 it is shown how the system detects one point in the object. In fig. 4 "mik 1 - 5" for example corresponds to the microphones 3a - 3e.

Solid-drawn lines in fig. 4 relates to the reflected signals detected by the microphones 3a - 3e. The system detects one point at a time. Knowing about how the transmitter 2 and the microphones are oriented and the characteristics of the ultrasonic signal the robot can estimate the distance and direction to a detected point on an object. In the published Swedish Patent SE502834 such a sensor system is described more in detail. In fig. 1 in this application, a free moving and hanging front part 6 which the robot uses in order to detect a direct collision with an obstacle or object is shown. The front part moves when getting in contact with an object and affects micro switches or other motion detectors behind the front part. An over part 7 under which a dust collecting container is mounted is also shown in the figure.

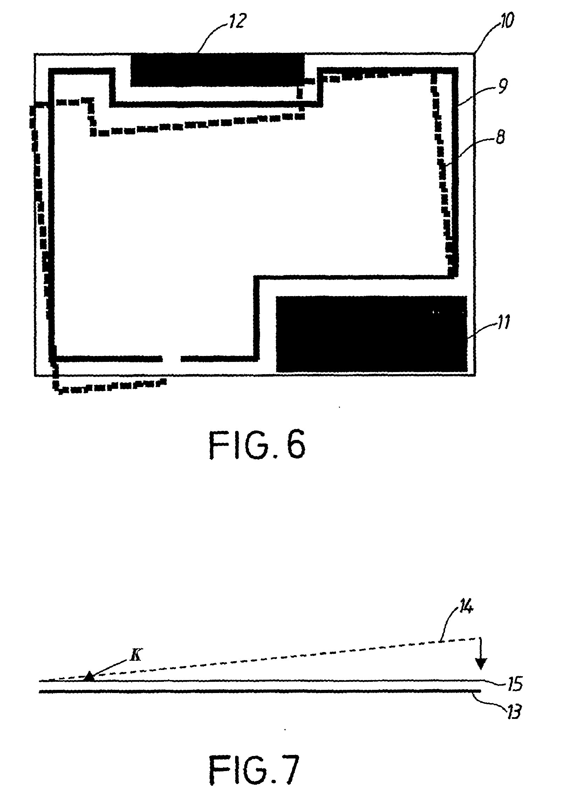

In order to enable an effective navigation the robot uses the wall following behaviour, as described earlier in this document. Using this behaviour, the robot first starts seeking up a wall, see fig. 6. Thereafter, the robot follows the walls that surround the room all the way around until it has reached back to its original wall following position. The wheel sensors detect the motion and calculate the position of the robot. Based on the wall following, the robot creates a map of the room. The sensor system is uses in order to control that a wall is followed. In fig. 6 the positions of the robot, estimated by the wheel sensors on the robot, are shown as a dotted line 8. The actual position of the robot is shown as the solid-drawn line 9. The outer frame 10 of the figure corresponds to the surrounding walls and the two black areas 11,12 corresponds to obstacles in the room area. Since the sensor system detects the walls and obstacles it is possible to achieve a working wall following behaviour.

The method according to the present invention will know be described more thoroughly. The wall following behaviour shown in fig. 6 constitutes the frame of the method according to the present invention. A problem with the wall following behaviour is that the position of the robot is estimated based on the wheel sensors. Since the movement of the wheels is not definitely related to the movement of the robot in relation to the floor, an error is created in the position estimation. Shown as the dotted line 8 in fig. 6. The actual movement, shown as the solid-drawn line 9, is created since the robot in reality is following the walls. Each time a driving wheel 1 slips on the floor, or in other ways loose direct contact with the floor, an error is added to the estimated position, which causes the total error of the estimation to increase as the robot movement proceeds.

In order to achieve improved position estimation for the robot the invention method uses the wall following behaviour. Also, the method according to the present invention assumes a relation in horizontal extension direction between the walls or between walls and other larger objects in the area (room) in which the robot operates. The assumption is based on the fact that walls are normally perpendicular to each other. Other angles, such as 30° (DEG), 45° or 60°, are common in modern rooms and can also be taken into the assumption. In this illustrative embodiment perpendicular and parallel walls are of most interest, but the present invention shall be read taking the other wall angle relations in consideration. As for larger objects, the assumption is that these are normally placed perpendicular or in parallel with a wall. They may also be placed in 30°, 45° or 60° relations to a wall.

Taking these assumptions into consideration the position of the robot, estimated 8 based on information from the wheel sensors, is to be corrected into the correct position 9. The method compares the estimated direction when the robot follows a first wall or larger object with the estimated direction when the robot follows a second wall. The errors (skids etc.) cause these estimated directions to differ from each other with more or less than 90°, 180°, 270°, 360° (for the perpendicular or parallel objects or walls). Knowing that there is a difference between the estimated value and the assumption value gives the robot information, which enables it to correct the estimated position. Referring to fig. 6, the estimated route shown as the dotted line 8 will be corrected into the actual route, shown as solid-drawn line 9. Later, a new correction can be accomplished if the estimated position is shown to again differ. As an alternative, a wall following using the method of the preferred embodiment is regularly performed.

In order to avoid that the robot mixes up the walls and larger objects with smaller objects that normally are more freely positioned in the area (room), certain threshold values are added to the method. Moreover, curved walls are excluded from the method.

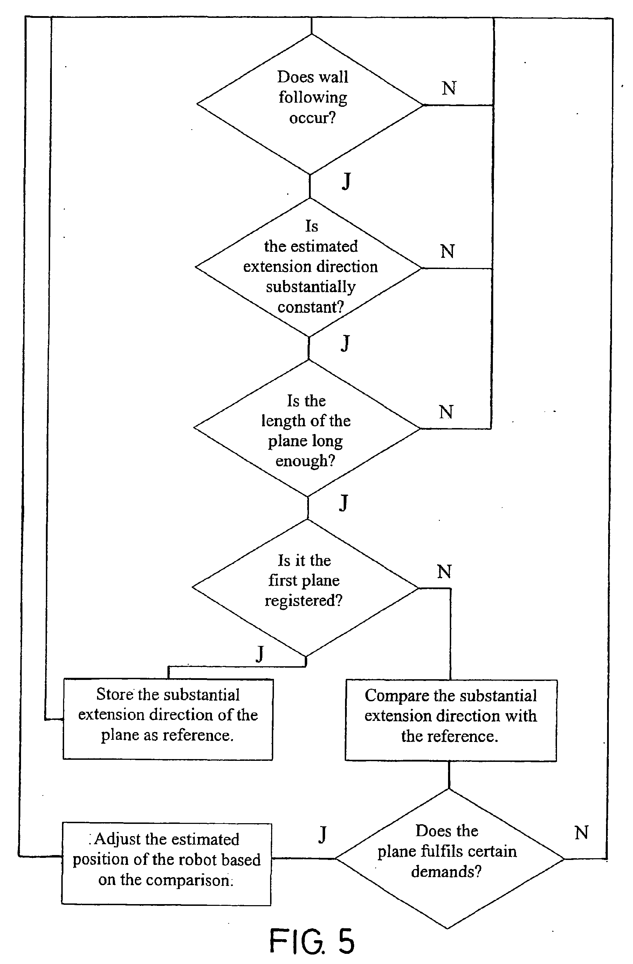

Below, an algorithm corresponding to the method according to the present invention, is shown, see also the flow chart in fig. 5. The algorithm contains the following steps:

> if *FollowingStraightWall*
>
>   k=k+1
>
>   if *endWallEncountered*
>
>    Extract line parameter *l*
>
>    if ($l \geq minLength$)
>
>     Extract line parameters ($\rho, \varepsilon$)
>
>     if *firstLine*
>
>      Set *RefAngle* = $\varepsilon$
>
>     else if | $\varepsilon$ - *RefAngle* | $\leq angleTh$
>
>      Backtrace the robot pose from the
>
>      starting point of the wall compensating
>
>      for the angular error
>
>   k=0

*FollowingStraightWall* relates to the earlier mentioned wall following behaviour. Wall following is accomplished by the sensor system, in which the transmitter 2 and the microphones 3a - 3e, 4a - 4d detects and makes sure that the robot can follow a wall or any other plane detected by the sensor system. A detected plane could relate to a solid furniture wall side or a virtual wall sides defined and created by the sensor system, which virtual wall for example extends between the legs of a large sofa. The method according to the invention is not intended to be limited to which kind of walls the robot can see and define, but to the fact that the robot starts a wall following procedure following of any wall or plane. Even if the method primary is intended for the following of solid walls of any kind, which means that the robot cannot physically pass "through" the wall, any wall or furniture side followed will from now on be defined as a plane defined by the robot, whether or not it is a solid wall or a virtual wall. As the robot moves in parallel with the plane it continuously detects or for virtual walls assumes points on the plane, and if the distance remains substantially constant the *FollowingStraightWall* is set. The distance must also remain within a certain threshold value, for example 5 centimetres. The threshold value will cause the robot to detect if a wall is ended. For virtual walls this continues distance detection is not real and therefore the distance control will work differently, not described here. The idea with this distance idea is to investigate if a solid wall is followed properly.

If the sensor system from the wheel sensors detect that the moving direction of the robot after *FollowingStraightWall* is set diverges, this diverge must be kept within a threshold value of for example 3° (DEG). This value is set in order to detect if a plane is ended or if the Wall following has start oscillating. The threshold angle relates to the difference in the moving direction on two different moments after one another. Further, a second threshold value of for example 5° (DEG) is set that relates to the difference in moving direction between the direction registered at the moment of *FollowingStraightWall* and the direction registered at the last moment when a plane ends or the robot stops following a wall, at *endWallEncountered.* This second threshold value is set in order to detect if the plane followed was straight or curved. Here also, a virtual wall normally will be followed without angle divergences, which means that such a control for virtual walls works differently.

When one of these threshold values is exceeded *endWallEncountered* is set. Thereafter the moving distance between *FollowingStraightwall* and *endWallEncountered* is registered. This distance corresponds to the length *l* of the plane, which corresponds to the wall 10 or larger object 11,12 along which the robot has moved. If *l* is larger or equal to *minLength,* for example set to 80 centimetres, the essential extension direction ε of the defined plane followed and the extension length ρ of the same plane is calculated with a Hugh Transform (not shown or described here) and stored. Both values are calculated based on the information registered by the wheel sensors. Considering virtual walls, *endWallEncountered* will be set based on other control aspects as mentioned earlier. How this is done will not be described any further in this application. The important thing is that *endWallEncountered* is set also for virtual walls when the wall following of those fulfil certain demands, and that the distance demands controlled after *endWallencountered* will be evaluated also for the virtual walls.

Further, according to the method, if the robot establishes that the plane values are the first stored after a certain moment, ε is set as *RefAngle.* This means a moment when the robot starts operating or is set to do a new wall following procedure. On the other hand, if the plane values are not the first stored after that moment the angle ε will be compared with *RefAngle.* During this comparison the difference will be compensated for the assumption angles 90°, 180°, 270°, 360° mentioned above. This means that if the difference is 93°, 90° will be subtracted and a result difference value of +/- 3° will come out, defined as *Rdiff.* If it is shown, during this comparing, that *Rdiff* has a value that is not zero it also needs to stay within a threshold value *angleTh.*

The threshold value *angleTh* is not definite but continuously recalculated based on the uncertainty registered during earlier adjustments done by the method according to the invention. Its maximum value is 25° in case the assumption is that only the angle relation between two defined planes are 90°, 180°, 270° or 360°. The compensated *Rdiff* can be defined as:

$$Rdiff = \min \left[ \left| \varepsilon - RefAngle \right|, \left| \varepsilon - (RefAngle + 90°) \right|, \right.$$
$$\left. \left| \varepsilon - (RefAngle + 180°) \right|, \left| \varepsilon - (RefAngle + 270°) \right| \right]$$

In case other assumption angles are allowed (for example 30°, 45°, 60°) *angleTh* should be lower in order for the method to work satisfying. *Rdiff* will thereby be compensated based also on these assumption angles.

The compensated *Rdiff* is finally used in order to adjust the position estimated by the robot wheel sensors. Now referring to fig. 7, the new position is calculated as an adjustment of the angle caused by the difference in the estimated and actual angle relation between two defined planes. The estimated angle refers to the extension direction of the defined plane that the robot moved along between *FollowingStraightWall* and *endWallEncountered.* In fig. 7, the solid-drawn line 13 relates to the actual extension direction of the defined plane, such as the wall or furniture side. The dotted line 14 relates the estimated extension direction of that plane, estimated based on information form the wheel sensors. Finally, the thinner solid-drawn line 15 relates to the correction of the estimated direction, where "K" is the correction and corresponds to *Rdiff,* the direction of *Rdiff* taken into consideration. The adjusted direction may then be used as reference in the method algorithm and compared with the next estimated plane direction under the assumption that these should be related in perpendicular or parallel to each other.

The invention is not limited by the fact that the robot needs to have a room sensor system using IR or Ultrasonic signals in order to accomplish a wall following behaviour. Any kind of solutions, such as wheel rolling on the wall or any other solution close in fact for the person skilled in the art can be used. The only demand is that any selected solution can accomplish and detect a wall following behaviour, where walls correspond to any plane defined by the robot.

### Claims

1. Method for position determination of an automatic apparatus on wheels (1), at least one wheel comprising at least one wheel sensor that recognizes the rotation of said wheel (1), which apparatus also comprising at least one room sensor (2,3a-3e, 4a-4d) detecting objects in the space surrounding the apparatus **characterized in**,

   estimating the motion direction, the motion velocity and the estimated position of the apparatus at least using information from at least one wheel sensor;

   estimating a substantial horizontal extension direction (14) of substantially vertical planes (13) on the objects (10-12), which planes (13) are defined by the apparatus using information from said at least one room sensor (2,3a-3e, 4a-4d); and

   determining the substantial, actual position of the apparatus using at least one predetermined assumption on the relationship between the extension direction (15) of different planes (13), wherein said extension directions (15) of the defined planes (13) are recognized using at least one of the room sensors (2,3a-3e, 4a-4d) and detecting if the motion direction (9) of the apparatus is substantially parallel with the extension direction (15) of at least one of said, defined planes (13).

2. Method according to claim 1 **characterized in that** the estimation is also accomplished using stored information on wheel dimension and information on the distance between the wheels (1), which distance may be determined using a track gauge calculating method.

3. Method according to claim 2 **characterized in that** the wheel distance calculating method comprises a recurring calculation of the distance based of information on the wheel dimension and information about the position of objects in relation to the apparatus.

4. Method according to any of the preceding claims **characterized in that** the distance between the apparatus and an object is recognized using information from at least one room sensor (2,3a-3e, 4a-4d).

5. Method according to any of the preceding claims **characterized in that** at least one of the room sensors (2, 3a-3e, 4a-4d) uses ultrasonic signals in order to detect an object.

6. Method according to any of the preceding claims **characterized in that** at least one of the room sensors (2,3a-3e, 4a-4d) uses mechanical detecting means in order to detect if the apparatus is in contact with an object.

7. Method according to any one of preceding claims **characterized in that** when said parallel motion (9) is detected, the motion direction *R0* of the apparatus is at first at a first moment *TD0* detected and thereafter, at later moments *TD1-TDn,* the motion direction *R1-Rn* is also detected.

8. Method according to claim 7 **characterized in that** when at least one of the room sensors (2,3a-3e, 4a-4d) at a first moment *TDend* after *TD0* detects that the distance between the apparatus and the defined plane (13), which plane said apparatus moves substantially in parallel with, diverges from certain stored or by the apparatus established distance demands and/or at least one of the wheel sensors at a first moment *TDend* after *TD0* detects that the motion direction Rend of the apparatus diverges from certain stored or by the apparatus established direction demands, and/or if it is detected at a first moment *TDend* after *TD0* that a defined plane fulfils certain demands, a measuring of the moving distance of the apparatus counted from *TD0* to *TDend* is performed, said distance being calculated and stored.

9. Method according to claim 8 **characterized in that** the direction demand corresponds to that the absolute value of the difference between *Rend* and *R0* is larger than a certain first direction value and/or that the absolute value of the difference between *Rend* and the motion direction detected at a moment after *TD0* but before *TDend* is larger than a certain second direction value.

10. Method according to claim 9 **characterized in that** the first direction value is set to 5° (DEG) and the second direction value is set to 3° (DEG).

11. Method according to any of the claims 8-10 **characterized In that** if said moving distance is larger than or equal to a certain stored or by the apparatus established distance value, at least the substantial motion direction (14) between *TD0* and *TDend,* based on information from at least one wheel sensor, is calculated and stored.

12. Method according to claim 11 **characterized in that** the distance value is set to approximately 80 centimetres.

13. Method according to any of the claims 11 or 12 **characterized in that** the said substantial motion direction is set as *RefAngle* if it is the first substantial motion direction stored after a certain moment.

14. Method according to claim 13 **characterized in that** the substantial motion direction (14) for at least one of said moving distances larger or equal to a certain stored or by the apparatus established value is compared with *RefAngle,* whereby a difference in direction is calculated.

15. Method according to any one of the preceding claims 7-14 **characterized in that** a direction value *Rdiff* is calculated based on said difference in direction compensated by assumption values for differences in extension direction between two of the defined planes.

16. Method according to claim 15 **characterized in that** the assumption values corresponds to at least one of the values 30° (DEG), 45°(DEG), 60° (DEG) or 90° (DEG).

17. Method according to any of the claims 15-16 **characterized in that** if *Rdiff* is less than or equal to a certain stored or by the apparatus established direction value *angleTh,* the estimated motion direction (14) of the apparatus is corrected in correspondence to *Rdiff.*

18. Method according to claim 17 **characterized in that** *angle Th* is repeatedly adjusted based on the uncertainty established from the closest earlier correction, whereby *angleTh* has a limit value which is not allowed to be exceeded, said limit value being defined based on which relation in extension directions between different defined planes that the method is intended to handle.

19. Method according to any of the claims 17-18 **characterized in that** the value of correction in the estimated direction corresponds to *Rdiff.*

20. Use of a method according to any of the claims 1-19 together with an automatic vacuum cleaner.


**Patentansprüche**

1. Verfahren zur Bestimmung der Position einer automatischen Vorrichtung auf Rädern (1), wobei mindestes ein Rad mindestens einen Radsensor umfasst, der die Drehung des Rades (1) erkennt, wobei die Vorrichtung auch mindestens einen Raumsensor (2, 3a-3e, 4a-4d) umfasst, der Gegenstände in dem Raum erfasst, der die Vorrichtung umgibt, **dadurch gekennzeichnet, dass**
die Bewegungsrichtung, die Bewegungsgeschwindigkeit und die geschätzte Position der Vorrichtung geschätzt werden, wobei mindestens Informationen von einem Radsensor verwendet werden;
eine wesentliche horizontale Ausdehnungsrichtung (14) von im Wesentlichen vertikalen Ebenen (13) an den Gegenständen (10-12) geschätzt wird, wobei die Ebenen (13) durch die Vorrichtung definiert werden, indem Informationen von dem mindestens einen Raumsensor (2, 3a-3e, 4a-4d) verwendet werden; und
die wesentliche tatsächliche Position der Vorrichtung bestimmt wird, indem mindestens eine vorbestimmte Annahme über die Beziehung zwischen der Ausdehnungsrichtung (15) von verschiedenen Ebenen (13) verwendet wird, wobei die Ausdehnungsrichtungen (15) der definierten Ebenen (13) erkannt werden, indem mindestens einer der Raumsensoren (2, 3a-3e, 4a-4d) verwendet wird und festgestellt wird, ob die Bewegungsrichtung (9) der Vorrichtung im Wesentlichen parallel zur Ausdehnungsrichtung (15) von mindestens einer der definierten Ebenen (13) ist.

**2.** Verfahren nach Anspruch 1, **dadurch gekennzeichnet, dass** die Schätzung auch ausgeführt wird, indem gespeicherte Informationen über die Radabmessung und Informationen über den Abstand zwischen den Rädern (1) verwendet werden, wobei der Abstand bestimmt werden kann, indem ein Verfahren zur Berechnung der Spurweite angewendet wird.

**3.** Verfahren nach Anspruch 2, **dadurch gekennzeichnet, dass** das Verfahren zur Berechnung des Radabstands eine wiederkehrende Berechnung des Abstands auf der Basis von Informationen über die Radabmessung und Informationen über die Position von Gegenständen in Bezug auf die Vorrichtung umfasst.

**4.** Verfahren nach einem der vorhergehenden Ansprüche, **dadurch gekennzeichnet, dass** der Abstand zwischen der Vorrichtung und einem Gegenstand erkannt wird, indem Informationen von mindestens einem Raumsensor (2, 3a-3e, 4a-4d) verwendet werden.

**5.** Verfahren nach einem der vorhergehenden Ansprüche, **dadurch gekennzeichnet, dass** mindestens einer der Raumsensoren (2, 3a-3e, 4a-4d) Ultraschallsignale verwendet, um einen Gegenstand zu erkennen.

**6.** Verfahren nach einem der vorhergehenden Ansprüche, **dadurch gekennzeichnet, dass** mindestens einer der Raumsensoren (2, 3a-3e, 4a-4d) mechanische Erkennungsmittel verwendet, um zu erkennen, ob sich die Vorrichtung in Kontakt mit einem Gegenstand befindet.

**7.** Verfahren nach einem der vorhergehenden Ansprüche, **dadurch gekennzeichnet, dass** wenn die parallele Bewegung (9) erkannt wird, zuerst die Bewegungsrichtung *R0* der Vorrichtung zu einem ersten Zeitpunkt *TD0* erkannt wird und danach zu späteren Zeitpunkten *TD1-TDn* auch die Bewegungsrichtung *R1-Rn* erkannt wird.

**8.** Verfahren nach Anspruch 7, **dadurch gekennzeichnet, dass** wenn mindestens einer der Raumsensoren (2, 3a-3e, 4a-4d) zu einem ersten Zeitpunkt *TDend* nach *TD0* erkennt, dass der Abstand zwischen der Vorrichtung und der definierten Ebene (13), an der sich die Vorrichtung im Wesentlichen parallel entlangbewegt, von bestimmten gespeicherten oder durch die Vorrichtung ermittelten Abstandsanforderungen abweicht, und/oder mindestens einer der Radsensoren zu einem ersten Zeitpunkt *TDend* nach *TD0* erkennt, dass die Bewegungsrichtung Rend der Vorrichtung von bestimmten gespeicherten oder durch die Vorrichtung ermittelten Abstandsanforderungen abweicht und/oder wenn zu einem ersten Zeitpunkt *TDend* nach *TD0* erkannt wird, eine definierte Ebene bestimmte Anforderungen erfüllt, wird eine Messung der Bewegungsdistanz der Vorrichtung, gezählt von *TD0* bis *TDend,* durchgeführt dass, wobei die Distanz berechnet und gespeichert wird.

**9.** Verfahren nach Anspruch 8, **dadurch gekennzeichnet, dass** die Richtungsanforderung dem entspricht, dass der Absolutwert der Differenz zwischen *Rend* und *R0* größer ist als ein bestimmter erster Richtungswert und/oder dass der Absolutwert der Differenz zwischen *Rend* und der Bewegungsrichtung, die zu einem Zeitpunkt nach *TD0,* jedoch vor *TDend* erkannt wird, größer ist als ein bestimmter zweiter Richtungswert.

**10.** Verfahren nach Anspruch 9, **dadurch gekennzeichnet, dass** der erste Richtungswert auf 5° (DEG) festgelegt wird, und der zweite Richtungswert auf 3° (DEG) festgelegt wird.

**11.** Verfahren nach einem der Ansprüche 8-10, **dadurch gekennzeichnet, dass** wenn die Bewegungsdistanz größer als oder gleich einem bestimmten gespeicherten oder durch die Vorrichtung ermittelten Distanzwert ist, mindestens die wesentliche Bewegungsrichtung (14) zwischen *TD0* und *TDend* auf der Basis von Informationen seitens mindestens einem Radsensor berechnet und gespeichert wird.

**12.** Verfahren nach Anspruch 11, **dadurch gekennzeichnet, dass** der Distanzwert auf etwa 80 Zentimeter festgesetzt wird.

**13.** Verfahren nach einem der Ansprüche 11 oder 12, **dadurch gekennzeichnet, dass** die wesentliche Bewegungsrichtung als *RefAngle* festgesetzt wird, wenn sie die erste wesentliche Bewegungsrichtung ist, die nach einem bestimmten Zeitpunkt gespeichert wird.

**14.** Verfahren nach Anspruch 13, **dadurch gekennzeichnet, dass** die wesentliche Bewegungsrichtung (14) für mindestens eine der Bewegungsdistanzen, die größer als oder gleich einem bestimmten gespeicherten oder durch die Vorrichtung ermittelten Wert ist, mit *RefAngle* verglichen wird, wodurch ein Richtungsunterschied berechnet wird.

**15.** Verfahren nach einem der vorhergehenden Ansprüche 7-14, **dadurch gekennzeichnet, dass** ein Richtungswert *Rdiff* auf der Basis des Richtungsunterschieds berechnet wird, der durch Annahmewerte für Unterschiede in der Ausdehnungsrichtung zwischen zwei der definierten Ebenen kompensiert wird.

**16.** Verfahren nach Anspruch 15, **dadurch gekennzeichnet, dass** die Annahmewerte mindestens einem der Werte 30° (DEG), 45° (DEG), 60° (DEG) oder 90° (DEG) entsprechen.

**17.** Verfahren nach einem der Ansprüche 15-16, **dadurch gekennzeichnet, dass** wenn *Rdiff* kleiner als oder gleich einem bestimmten gespeicherten oder durch die Vorrichtung ermittelten Richtungswert *angleTh* ist, die geschätzte Bewegungsrichtung (14) der Vorrichtung entsprechend *Rdiff* korrigiert wird.

**18.** Verfahren nach Anspruch 17, **dadurch gekennzeichnet, dass** *angleTh* auf der Basis der Ungewissheit wiederholt angepasst wird, die aus der nächstliegenden früheren Korrektur ermittelt wird, wobei *angleTh* einen Grenzwert aufweist, der nicht überschritten werden darf, wobei der Grenzwert darauf basierend definiert wird, welche Ausdehnungsrichtungsbeziehung zwischen verschiedenen definierten Ebenen das Verfahren handhaben soll.

**19.** Verfahren nach einem der Ansprüche 17-18, **dadurch gekennzeichnet, dass** der Wert der Korrektur bei der geschätzten Richtung *Rdiff* entspricht.

**20.** Anwendung eines Verfahrens nach einem der Ansprüche 1-19 zusammen mit einem automatischen Staubsauger.

## Revendications

**1.** Procédé de détermination de position d'un appareil automatique sur roues (1), au moins une roue comprenant au moins un capteur de roue qui reconnaît la rotation de ladite roue (1), ledit appareil comprenant également au moins un capteur d'environnement (2, 3a-3e, 4a-4d) qui détecte des objets dans l'espace entourant l'appareil, **caractérisé par** les étapes consistant à :

estimer la direction de déplacement, la vitesse de déplacement et la position estimée de l'appareil au moins en utilisant des informations émanant d'au moins un capteur de roue ;
estimer une direction d'extension horizontale substantielle (14) de plans sensiblement verticaux (13) sur les objets (10 à 12), lesdits plans (13) étant définis par l'appareil en utilisant des informations émanant dudit au moins un capteur d'environnement (2, 3a-3e, 4a-4d) ; et
déterminer la position réelle substantielle de l'appareil en utilisant au moins une supposition prédéterminée de la relation entre la direction d'extension (15) de différents plans (13), dans lequel lesdites directions d'extension (15) des plans définis (13) sont reconnues en utilisant au moins l'un des capteurs d'environnement (2, 3a-3e, 4a-4d) et en détectant si la direction de déplacement (9) de l'appareil est sensiblement parallèle à la direction d'extension (15) d'au moins l'un desdits plans définis (13).

**2.** Procédé selon la revendication 1, **caractérisé en ce que** l'estimation est également accomplie en utilisant des informations stockées sur la dimension de roue et des informations sur la distance entre les roues (1), ladite distance pouvant être déterminée en utilisant un procédé de calcul de calibre de piste.

**3.** Procédé selon la revendication 2, **caractérisé en ce que** le procédé de calcul de distance de roue comprend un calcul récurrent de la distance sur la base des informations de dimension de roue et des informations de position des objets par rapport à l'appareil.

**4.** Procédé selon l'une quelconque des revendications précédentes, **caractérisé en ce que** la distance entre l'appareil et un objet est reconnue en utilisant des informations émanant d'au moins un capteur d'environnement (2, 3a-3e, 4a-4d).

**5.** Procédé selon l'une quelconque des revendications précédentes, **caractérisé en ce qu'**au moins l'un des capteurs d'environnement (2, 3a-3e, 4a-4d) utilise des signaux ultrasonores pour détecter un objet.

**6.** Procédé selon l'une quelconque des revendications précédentes, **caractérisé en ce qu'**au moins l'un des capteurs d'environnement (2, 3a-3e, 4a-4d) utilise des moyens de détection mécaniques pour détecter si l'appareil est en contact avec un objet.

**7.** Procédé selon l'une quelconque des revendications précédentes, **caractérisé en ce que** lorsque ledit déplacement parallèle (9) est détecté, la direction de déplacement R0 de l'appareil est au début détectée à un premier moment TD0 puis, aux moments suivants TD1 à TDn, la direction de déplacement R1 à Rn est également détectée.

**8.** Procédé selon la revendication 7, **caractérisé en ce qu'**au moins l'un des capteurs d'environnement (2, 3a-3e, 4a-4d) à un premier moment TDend après TD0 détecte que la distance entre l'appareil et le plan défini (13), ledit appareil se déplaçant sensiblement parallèlement audit plan, diverge de certaines exigences de distances stockées ou établies par l'appareil et/ou au moins l'un des capteurs de roue à un premier moment TDend après TD0 détecte que la direction de déplacement Rend de l'appareil diverge de certaines exigences de directions stockées ou de certaines exigences de directions établies par l'appareil, et/ou s'il est détecté à un premier moment TDend après TD0 qu'un plan défini répond à certaines exigences, une mesure de la distance de déplacement de l'appareil comptée de TD0 à TDend est effectuée, ladite distance étant calculée et stockée.

**9.** Procédé selon la revendication 8, **caractérisé en ce que** l'exigence de direction correspond à l'exigence selon laquelle la valeur absolue de la différence entre Rend et R0 est supérieure à une certaine première valeur de direction et/ou la valeur absolue de la différence entre Rend et la direction de déplacement détectée à un moment après TD0 mais avant TDend est supérieure à une certaine seconde valeur de direction.

**10.** Procédé selon la revendication 9, **caractérisé en ce que** la première valeur de direction est réglée à 5° (degrés) et la seconde valeur de direction est réglée à 3° (degrés).

**11.** Procédé selon l'une quelconque des revendications 8 à 10, **caractérisé en ce que** si ladite distance de déplacement est supérieure ou égale à une certaine valeur de distance stockée ou à une valeur de distance établie par l'appareil, au moins la direction de déplacement substantielle (14) entre TD0 et TDend, sur la base des informations émanant d'au moins un capteur de roue, est calculée et stockée.

**12.** Procédé selon la revendication 11, **caractérisé en ce que** la valeur de distance est réglée à environ 80 cm.

**13.** Procédé selon l'une quelconque des revendications 11 ou 12, **caractérisé en ce que** ladite direction de déplacement substantielle est réglée en tant que RefAngle si c'est la première direction de déplacement substantielle stockée après un certain moment.

**14.** Procédé selon la revendication 13, **caractérisé en ce que** la direction de déplacement substantielle (14) pour au moins l'une desdites distances de déplacement supérieures ou égales à une certaine valeur stockée ou à une valeur établie par l'appareil est comparée à RefAngle, moyennant quoi une différence de direction est calculée.

**15.** Procédé selon l'une quelconque des revendications 7 à 14, **caractérisé en ce qu'**une valeur de direction Rdiff est calculée sur la base de ladite différence de direction compensée par des valeurs de supposition pour des différences de direction d'extension entre deux des plans définis.

**16.** Procédé selon la revendication 15, **caractérisé en ce que** les valeurs de supposition correspondent à au moins l'une des valeurs de 30° (degrés), 45° (degrés), 60° (degrés) et 90° (degrés).

**17.** Procédé selon l'une quelconque des revendications 15 et 16, **caractérisé en ce que** si Rdiff est inférieur ou égal à une certaine valeur de direction stockée ou une valeur de direction établie par l'appareil angleTh, la direction de déplacement estimée (14) de l'appareil est corrigée en correspondance avec Rdiff.

**18.** Procédé selon la revendication 17, **caractérisé en ce que** angleTh est ajusté à répétition sur la base de l'incertitude établie à partir de la correction la plus récente, moyennant quoi angleTh a une valeur limite qui ne doit pas être dépassée, ladite valeur limite étant définie sur la base de la relation des directions d'extension entre les différents plans définis que le procédé est censé prendre en charge.

**19.** Procédé selon l'une quelconque des revendications 17 et 18, **caractérisé en ce que** la valeur de correction de la direction estimée correspond à Rdiff.

**20.** Utilisation d'un procédé selon l'une quelconque des revendications 1 à 19 avec un aspirateur automatique.

Fig. 1

Fig. 2

FIG. 3

FIG. 4

Does wall
following
occur?
N

J

Is
the estimated
extension direction
substantially
constant?
N

J

Is the
length of the
plane long
enough?
N

J

Is it the
first plane
registered?
N

J

Store the substantial
extension direction of the
plane as reference.

Compare the substantial
extension direction with
the reference.

Adjust the estimated
position of the robot based
on the comparison.

J

Does the
plane fulfils certain
demands?
N

FIG. 5

FIG. 6

FIG.7